# EUROPEAN PATENT SPECIFICATION

(11) **EP 3 348 886 B1**
(45) Date of publication and mention of the grant of the patent: **27.11.2019**
(21) Application number: 17382011.9
(22) Date of filing: 13.01.2017
(51) Int. Cl.: F16K 99/00

(54) **MICROFLUIDICS VALVE**
MIKROFLUIDISCHES VENTIL
SOUPAPE MICROFLUIDIQUE

(43) Date of publication of application: 18.07.2018
(73) Proprietor: CONSEJO SUPERIOR DE INVESTIGACIONES CIENTIFICAS, 28006 Madrid (ES)
(72) Inventor: Baldi Coll, Antonio, 08193 Cerdanyola del Vallès, Barcelona (ES); Díaz González, María, 08193 Cerdanyola del Vallès, Barcelona (ES); Fernández Sánchez, César, 08193 Cerdanyola del Vallès, Barcelona (ES); Muñoz Berbel, Francesc Xavier, 08193 Cerdanyola del Vallès, Barcelona (ES)
(74) Representative: Pons Ariño, Angel

(56) References cited:
- US-A- 4 824 073
- US-A1- 2004 131 345
- US-A1- 2006 044 084
- US-A1- 2011 126 918
- US-A1- 2011 232 832

## Description

### OBJECT OF THE INVENTION

The present invention is enclosed in the technical field of the microfluidics valves. More specifically a multiple actuation light-addressable microfluidics valve comprising a barrier of a meltable material is described.

### BACKGROUND OF THE INVENTION

Phase-change paraffin wax valves have emerged in recent years as alternative to electromechanical or pneumatic valves in microfluidics. Among them, those based on the use of paraffin wax as flow plug have attracted considerable attention due to their simple operation and design as well as their latching capability.

The more important technical problems associated to this kind of valves is that most of these valves are single-use, show a slow response and require the challenging deposition of molten wax at specific locations within their microchannels.

Document WO2004042357 describes a microfluidic device comprising a heating element which transfers heat to a wax plug which is located between substrates covering a vertical distance. Afterwards, a pressure is applied at a side of the wax plug so the melted wax displaces, opening completely a passage between the substrates. For the closing of the device it is necessary to have a higher pressure in one of the sides of the passage so the wax is forced to return to its original position.

Document US4949742 describes a gas valve which is particularly useful in a laser gas fill system requiring repeated fillings. Includes a conduit positioned between high and low pressure gas regions and within the conduit is a restriction, and this restriction is closed by a meltable solid material. When the valve is to be opened, heat is applied to the meltable solid material causing at least some of the material to flow and allow the passage of gas from the higher pressure region to the lower pressure region. When the pressure between the two regions has substantially equalized surface tension associated with the restriction in the conduit pulls the liquefied material back into place to close and reseal the valve, at which point heat application is discontinued so that the material again becomes solid. The geometry of the restriction is such that all or substantially all of the liquid material will return essentially to its original position, allowing the valve to be used in repeated on/off cycles.

Document "Multiple actuation microvalves in wax Microfluidics, Lab Chip, 2016, 16, 3969" describes valves that use a first electrical heater to melt a small tunnel through a wax barrier and allow the passage of fluid when the pressure applied ejects the melted wax out of the barrier. Two more heaters in the valves are used to stop the passage of fluid by melting wax at both sides of the tunnel and refilling the tunnel with the melted wax. Wax-barrier valves using electrical heaters require at least one electrical connection per heater. In disposable lab-on-a-chip systems requiring high number of valves this involves including a connector with many pins to connect the chip to the driving circuits in the readout instrument. A chip with connector is more expensive and less reliable than a chip without connector.

From the state of the art it is known document US2011232832 which describes a microfluidic valve that includes a platform with two substrates combined facing each other; a channel having a first depth allowing a fluid to flow between the two substrates; a valve gap that is disposed on at least a region of the channel and has a second depth which is smaller than the first depth; and a valve plug that is disposed to fill the valve gap and is formed of a valve material made by mixing a phase change material, which is solid at room temperature, with a plurality of exothermic particles that emit an amount of heat sufficient to melt the phase change material by absorbing electromagnetic waves.

It is also known document US2011126918 which discloses a valve unit and a reaction apparatus having the valve unit. The valve unit includes a phase transition material, which melts and expands upon an application of the electromagnetic waves to the valve filler, and the valve filler is directed into the channel through the connection passage and closes the channel. The valve unit also includes heat generation particles, which are dispersed in the phase transition material and generate heat upon an application of electromagnetic wave energy.

Document US4824073 describes an apparatus for converting control signals of an electrical or optical nature of any other type or signal which may be converted to a change of temperature of a fixed volume of material trapped in a chamber to flexure of a membrane forming one wall of the chamber. The device is integrated onto a silicon wafer by anisotropically etching a trench into said wafer so a thin wall of silicon remains as the bottom wall of the trench. The trench is then hermetically sealed. Typically, a resistor pattern is etched on the face of a pyrex wafer used as a top for the trench to form the cavity. When current is passed through this resistor, the material in the cavity is heated, its vapor pressure increases and expansion occurs. This causes the flexible wall to flex outward. Typically, a fluid passageway having a nozzle aperture surrounded by a sealing surface is photolithographically etched into a third wafer. This third wafer is then bonded to the first wafer such that the sealing surface is adjacent to the membrane such that when expansion in the cavity occurs, the membrane flexes until it contacts the sealing surface and shuts off fluid flow through the nozzle aperture.

Document US2004131345 discloses an apparatus for performing temperature cycling, comprising a micro channel reactor structure and having a heating structure defining a desired temperature profile. A preferred embodiment of a heating element structure comprises a pattern of areas of a material capable of providing heat when energized, disposed over said micro channel reactor structure.

Lastly, it is also described, in document US2006044084, an actuator for a component such as a valve that comprises a chamber or capsule of a flexible material, which chamber or capsule is mounted on a substrate. Within the capsule is a quantity of thermopneumatic material (i.e. material which expands in volume upon heating). Also disposed within the capsule is an infrared radiation absorbing layer. In use, infrared radiation is applied to the capsule at or close to the location of the infrared radiation absorbing layer, thereby causing the thermopneumatic material within the capsule to be heated. As the thermopneumatic material is heated, it expands in volume and causes movement of the flexible material forming the capsule, i.e. it causes mechanical movement thereof. As the thermopneumatic material cools, it returns to its original volume and the flexible material of the capsule returns to its original position accordingly.

### DESCRIPTION OF THE INVENTION

The object of the present invention is a microfluidics valve that is light-addressable and that is multiple actuated.

Said valve comprises at least a microchannel in which a barrier of a meltable material is placed. At the usual working temperature, the meltable material is blocking the passage of fluid through the microchannel.

In order to allow the fluid passage through the microchannel, the meltable material, has to be heated. To this end, the valve comprises at least an optical heater that is placed in correspondence to the barrier blocking the microchannel. The optical heater is placed in one of the substrates and projects from both sides of the barrier. The meltable material has low viscosity upon melting, so that it can be easily ejected out of the barrier by a pressure difference between both sides of the valve.

Preferably, the meltable material has a melting point of between 50ºC and 150 ºC, since meltable materials with lower melting points would melt in warm environments and meltable materials with higher melting points would require high quantities of energy for their actuation and would require substrates resistant to high temperatures.

Also, the meltable material is highly transparent to the light in some frequencies range so it does not melt directly when being irradiated by an external light source but when the heater transfers the heat.

Meltable materials with these properties include, but are not limited to, natural bees wax, paraffin wax, and wax-based hot melts.

Said optical heater is made of a phototermal material, that is, the material can absorb light energy in a range of frequencies and convert it to heat. So, when the optical heater is irradiated with an external light source its temperature increases rapidly. The valve comprises at least a section of one of the substrates which is transparent so the heater can receive the light of light source. The light source can be, for example, a LED light.

When the colored line receives the light, it accumulates heat and passes said heat to the barrier that is in contact with the optical heater thus creating a tunnel through the barrier along the microchannel. The tunnel has a smaller section than the barrier since only the meltable material which is in contact with the optical heater melts. When the meltable material of the barrier which is in contact with the optical heater is melted it is displaced to one of the ends of the microchannel so the section of the tunnel is left free for the fluid to pass through.

This feature allows fastening the opening operations of the valve. Furthermore, since less material is melted, less energy is needed for the opening of the valve and also the closing operations of the valve are performed faster.

In an embodiment of the invention, the valve is placed between two volumes which are at different pressure. When the heater is activated and melts the barrier, the difference in pressure between both volumes contributes to displace the melted material to one side of the barrier, allowing the passage of the fluids through it.

In order to close the valve, the pressure at both sides of the barrier has to be equalized and then the optical heater has to be activated. The meltable material of the barrier, preferably wax, near the optical heater is melted and refills the tunnel. Then, when the optical heater is disconnected, the meltable material solidifies, acting again as a barrier, blocking the microchannel.

In another embodiment of the invention, the microfluidics valve is used in lab-on-a-chip applications that use pressurized reservoirs as source of pressure for liquid movement. In those cases it cannot be assured an equalized pressure at both sides of the microchannel.

To solve this technical problem and provide a valve that can be used even when there is a pressure difference between both sides of the valve, in an embodiment of the invention, the valve comprises more than one heater. This embodiment of the valve can be used even in cases when pressurized reservoirs are used as source of pressure for liquid movement.

In this case, a first optical heater is placed in correspondence with the barrier, and two additional optical heaters are placed at both sides of the first optical heater.

The first optical heater is placed in the longitudinal direction of the barrier. It has to be long enough to project from each side of the barrier. This feature is important to assure that all the length of the barrier is melted. That assures that the tunnel connects both sides of the barrier and the fluid can pass through the valve. The additional optical heaters have to be short enough to not project out of the barrier at any point.

The first optical heater is a colored feature, that is, it absorbs most of the light power at a particular range of frequencies, and the additional optical heaters are colored features of colors different to the color of the first optical heater, that is, they absorb most of the light power at a different range of frequencies. An essential feature of the valve of this embodiment of the invention is that the colors of the first optical heater and of the additional optical heaters have to preferentially absorb light at different ranges of frequencies. Also, the light source that has to be used to heat a specific heater has to be of a color complementary to the color of the colored line of said heater, that is, it has to contain most of the power in the frequency range that are preferentially absorbed by said heater, and has to contain little power in the frequency range that the other heaters preferentially absorb.

The possibilities for using the proposed microfluidic valve are:
- Flow control on disposable lab-on-a-chip systems: These valves allow easy implementation of reagent reservoirs integrated in the chip. The fluid is sealed in the reservoirs until the moment in which they have to be used. In that moment the valve is opened and the fluid exits the reservoir. Once enough liquid has exited the reservoir the valve can be closed until the next time the reagent is needed. For example, the reagent could be a rinsing solution that has to be used multiple times during an immunoassay implemented in a lab-on-a-chip.
- Gas or liquid samplers: These valves allow a high integration in a small area (>100 valves per cm²) so they can be used to provide highly compact samplers and with low consumption. Each sample can be stored in an individual reservoir. This type of systems may be of interest for environmental control, industrial production, and for biomedical applications.
- Pumps: In this case the system may comprise a chamber and two of these valves, one at the entrance and another one at the exit of the chamber. Controlling the aperture and closing of said valves, and the pressure inside the chamber, it can be used for the repeated generation of positive or negative pressure with which to produce movement of fluid in a microfluidic system. The sequence of each pumping cycle comprises the following steps:
   - activating an optical heater inside the chamber so the air in the interior of the chamber is heated and the pressure there raises above the exterior air pressure;
   - opening a first microchannel by heating a first barrier of a meltable material;
   - closing the microchannel when enough quantity of compressed air has passed through the microchannel and the pressure inside the chamber has equalized the exterior air pressure;
   - letting the air inside of the chamber to cool down until the pressure in the chamber lowers below the exterior air pressure;
   - opening a second microchannel until enough quantity of air has passed through the microchannel and the pressure of the air in the interior of the channel and the pressure of the air and the exterior air pressure are equalized.

The pump can also be implemented by producing fluid flow with the compression or expansion of the chamber with an external mechanical force, and using the opening and closing of the valves to regulate the entrance and exit of the fluid in the chamber always in the same direction.

The microfluidic wax microvalve is thus light-actuated and allows multiple-actuation, presents a fast response and has a very low energy-consumption. This wax microvalve is also inherently latched in both open and close states.

In an exemplary embodiment of the invention the response of the valve is approximately 100 ms for the opening time and less than 500 ms for the closing time, the enery-consumption is less than 1 J and is leak-proof to at least 80 kPa. Additionally, the area occupied by the valve is of less than 1 mm² so an important application of the proposed valve is its use in samplers and dispensers comprising a plurality of equal valves.

The proposed valve is actuated by using at least a light source without requiring any electrical connection for the valve. The valve can be easily fabricated as a fully integrated element of wax microfluidic devices using a low-cost and fast prototyping process. Furthermore, the valve comprising an optical heater allows avoiding the use of additional electrical connections. The fabrication process of the valves and the samplers comprising a plurality of valves is simple and cheap.

The microfluidics valve described can be manufactured according to actual methods for the manufacture of microfluidic components. In an embodiment of the invention, the valve comprises two substrates which are joined, for example, by an adhesive. In another embodiment of the invention the valve comprises, between the substrates, an additional layer which is made of wax.

In an embodiment of the invention one of the substrates comprises a hole in order to allow easily placing the barrier of meltable material in its correct position. In the valve, the hole is placed facing the optical heater (the first optical heater in the embodiments in which also additional optical heaters are present) so when the meltable material (for example wax) is introduced through the hole it is placed in contact with the optical heater.

The microfluidic valves described here perform a reversible open-close behavior and show an extremely short response time. This is a result of the valve comprising an optical heater that only melts the part of the barrier which is in contact with it thus creating a tunnel (of a smaller section than the microchannel) for the passage of the fluid. These valves have a lower energy consumption compared to the plug-type wax valve of the state of the art.

Another important advantage of the proposed valves is that the warm-up is made without contact. While in the electrical valves connections are needed (at least one per valve) in the present invention the optical heater allows heating the barrier of meltable material without contact.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1a.- Shows a perspective view of an embodiment of the microfluidic wax valve.
Figure 1b.- Shows the microfluidic valve of figure 1a with the barrier of meltable material.
Figure 1c.- Shows a section view of the microfluidics valve of figure 1b.
Figure 2a.- Shows a perspective view of another embodiment of the microfluidics valve.
Figure 2b.- Shows an exploded view of the microfluidics valve of figure 2a.
Figure 3.- Shows the operation of the microfluidics valve when it is being opened.
Figure 4.- Shows the operation of the microfluidics valve when it is being closed.
Figure 5a.- Shows a perspective view of a different embodiment of the microfluidics valve.
Figure 5b.- Shows the microfluidic valve of figure 5a with the barrier of meltable material.
Figure 5c.- Shows a section view of the microfluidics valve of figure 5b.
Figure 6a-6b.- Shows the opening process of the microfluidics valve of the embodiment of figures 5a-c.
Figures 7a-7c.- Shows the closing process of the microfluidics valve of the embodiments of figures 5a-5c.

### PREFERRED EMBODIMENT OF THE INVENTION

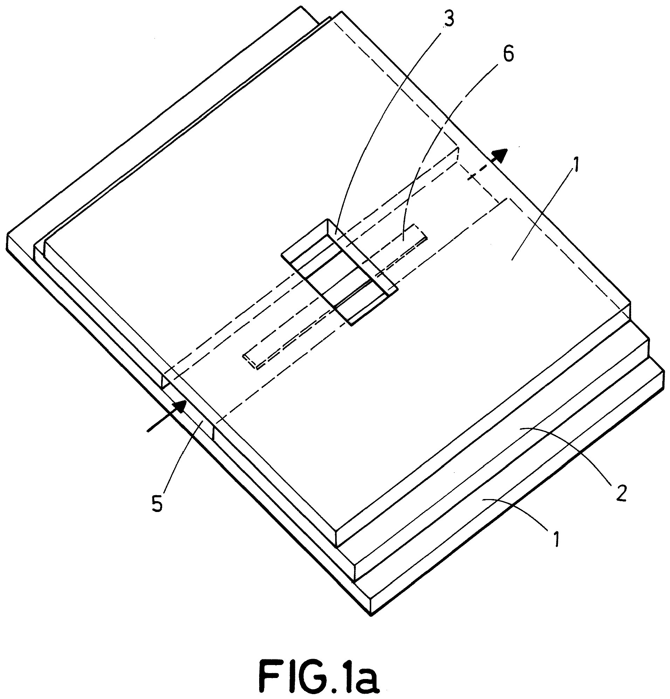

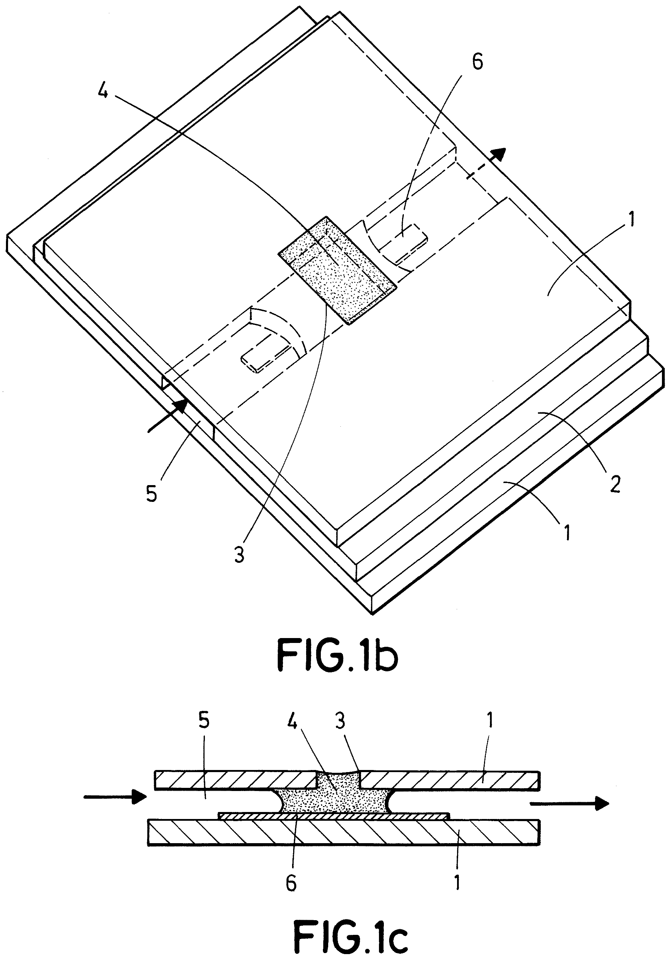

Following is a description, with the help of figures 1 to 7, of some examples of embodiments of the present invention.

In figure 1a it is shown a perspective view of a microfluidics valve according to one embodiment of the invention. In said embodiment the valve comprises two substrates (1) between which at least a microchannel (5) is formed. The substrates (1) can be joined by an adhesive (2).

The valve also comprises at least an optical heater (6) as shown in said figure. In order to allow the heating of the optical heater (6), at least a section of one of the substrates (1) is transparent.

Furthermore, as shown in figure 1b, the valve of the invention also comprises at least a barrier (4) of meltable material, placed in the microchannel (5), blocking said microchannel (5). As can be seen in the figure the optical heater (6) is placed in the longitudinal direction of the microchannel (5) and, in said direction, projects from both sides of the barrier (4).

In figure 1c it is shown a section view of the microfluidics valve. The section has been made in correspondence with the microchannel (5) so the microchannel (5) and the barrier (4) blocking said microchannel (4) are appreciated. The direction of the fluid through the valve has also been represented with arrows.

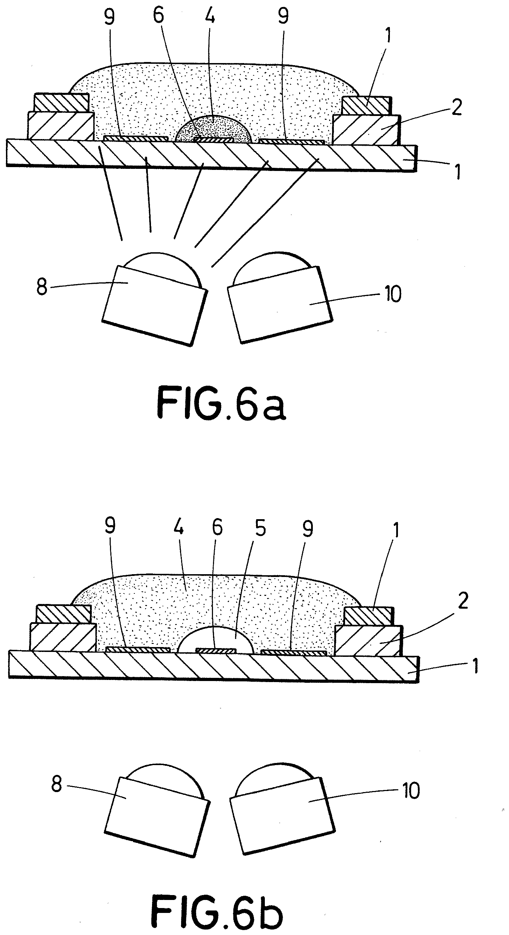

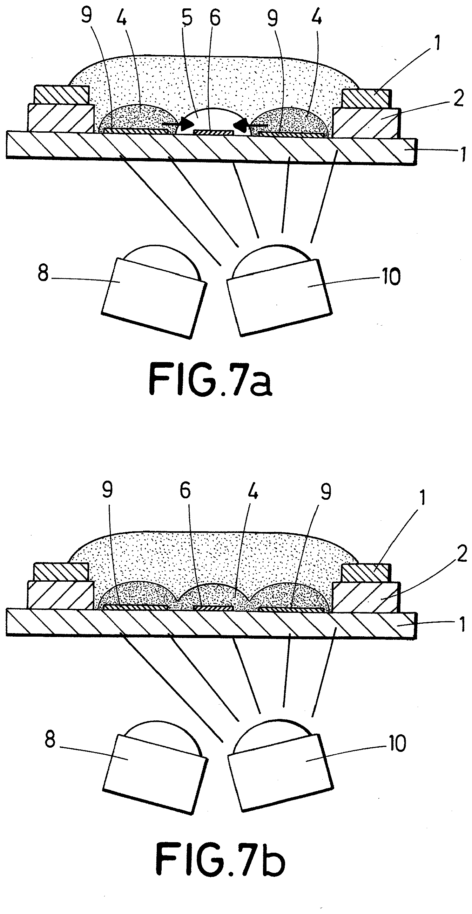

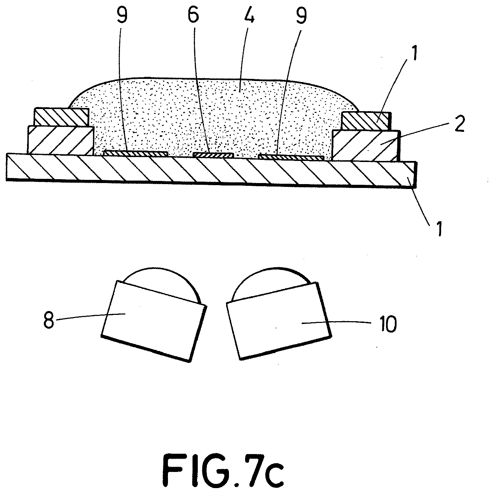

By actuating the optical heaters (6) corresponding to predetermined microchannels (5) the barriers (4) of said microchannels (5) are partially melted and tunnels (11) are opened to allow the fluid to pass through them. To actuate the optical heaters (6) an external light is focused on them. In this way the optical heaters (6) are heated and they transfer the heat to the meltable material of the barrier (4) which is contact with said optical heaters (6). In figures 6b and 7a the tunnel (11) formed in the barrier (4) placed in the microchannel (5) can be appreciated.

In the embodiments shown in the figures, the optical heater (6) is a colored line. The light used to actuate the optical heaters (6) has to be of a color complementary to the color of the optical heater (6). That is, if the optical heater (6) absorbs most of the light power at a particular range of frequencies, the light source has to have enough optical power at the same range of frequencies to assure the correct functioning of the valve.

In the embodiment shown in figures 1a-1c the microfluidics valve comprises at least a hole (3) in correspondence with the microchannel (5) and facing the optical heater (6).

This embodiment of figures 1a-1c allows easily placing the barrier (4) of meltable material on its correct position. In valves of the state of the art the meltable material had to be melted and then introduced into the microchannel and displaced until its final position. These solutions of the state of the art need a lot of time for the manufacture, part of the barrier can be finally placed in a position which is not the correct final position, lot of resources are needed to place the barrier (it has to be melt, pressure has to be applied to displace it, etc.) and external tools have to be used.

Also, this embodiment comprising the hole (3) cannot be used in the solutions of the state of the art because, in those valves the meltable material barrier (4) blocking the microchannel (5) is totally melted for the passing the fluids through the microchannel (5). In those cases, when melting the barrier, the meltable material forming the barrier (4) would exit through the hole (3) and it would be impossible to send the material back to the microchannel (5) to close the valve when needed, or to avoid the scape of liquid through the hole (3). In an embodiment of the invention the meltable material is wax.

In the present invention, when the optical heater (6) is actuated, only a small part of the barrier (4) is heated (only the part in contact with the optical heater (6)) so only a tunnel (11) of a smaller section than the microchannel (5) is opened for the passage of the fluid.

In an embodiment of the invention, the valve is to be installed between a first volume at initially higher pressure and a second volume at initially lower pressure in order to use said pressure during the opening of the valve to displace the melted barrier.

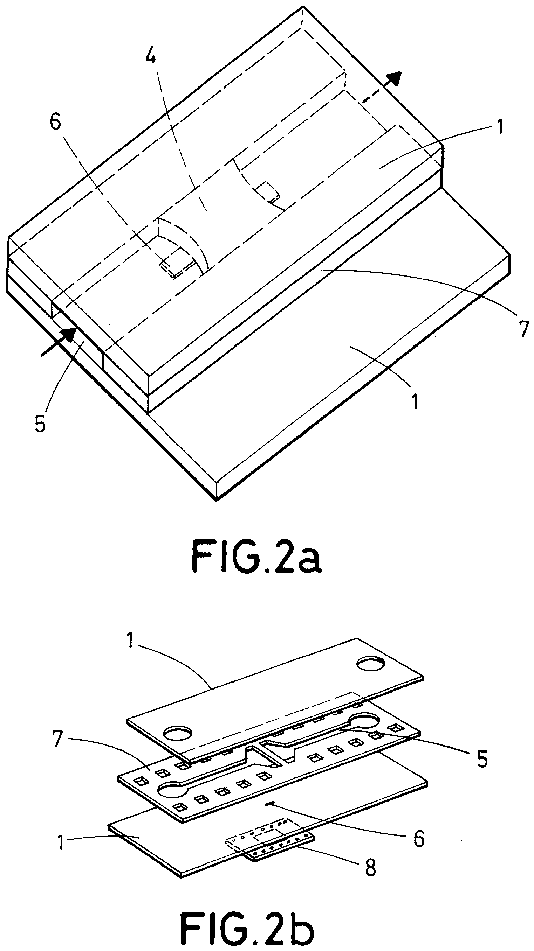

In figures 2a and 2b another embodiment of the invention is shown. In this case the valve comprises two substrates (1) with a wax layer (7) placed between them.

In the example of figure 2b, the valve structure comprises a 500 µm-length barrier (4) located in a microchannel (5) at the entrance of a chamber. The line printed on the substrate, which in an embodiment of the invention is black, is the optical heater (6) and is positioned perpendicular to the barrier (4) extending on both sides of the valve structure. This valve is designed for opening when a pressure difference is applied across the barrier (4) and for closing when there is no pressure. Both opening and closing of the valve occurred when the meltable material (for example wax) of the barrier (4) is melted using the heat released by the printed line upon light source (8) irradiation.

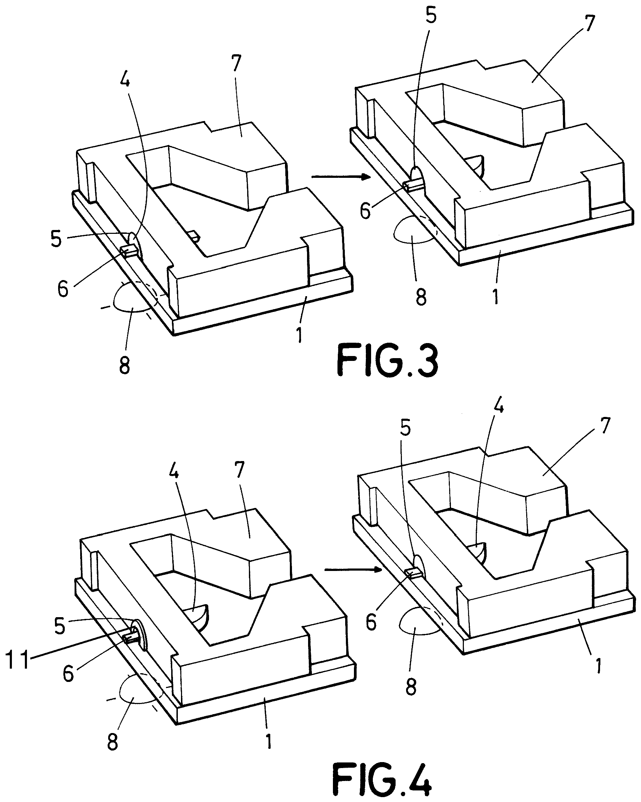

As represented in figure 3, the operation of the valve when it is being opened comprises a step of irradiating the optical heater (6) with a light source (8). In the first part of the figure a closed valve has been represented. It can be appreciated how the microchannel (5) of the valve is blocked with a barrier (4). Said barrier (4) is, in turn, placed in correspondence with the optical heater (6). As can be seen in the second part of the figure, when the light source (8) is applied and the optical heater (6) melts the barrier (4) which, in this case, is ejected to the interior of the chamber thus creating a tunnel (11) in the barrier (4) through which the fluid can pass.

In figure 4 it is represented the operation of the valve when it is being closed. In this case the original situation of the valve is with the barrier (4) having a tunnel. In the second part of the figure it can be seen how, when the optical heater (6) is activated again, the meltable material (for example wax) returns to its original position in the microchannel (5) and blocks it. Once the optical heater (6) is turned off, the meltable material (for example wax) solidifies and the valve remains permanently closed.

Performance of the microfluidics valves in an exemplary embodiment of the invention is characterized in both air and water under different experimental conditions. In both cases a minimum pressure drop of 3 kPa is required for a successful valve opening. The valve exhibits reversible open-close behavior for up to 30 actuation cycles in air (50 kPa) and 15 in water (25 kPa).

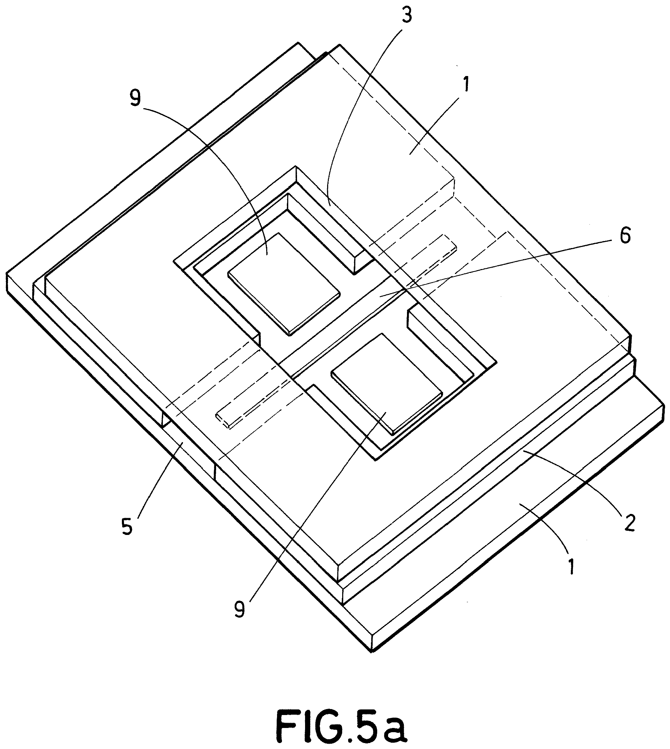

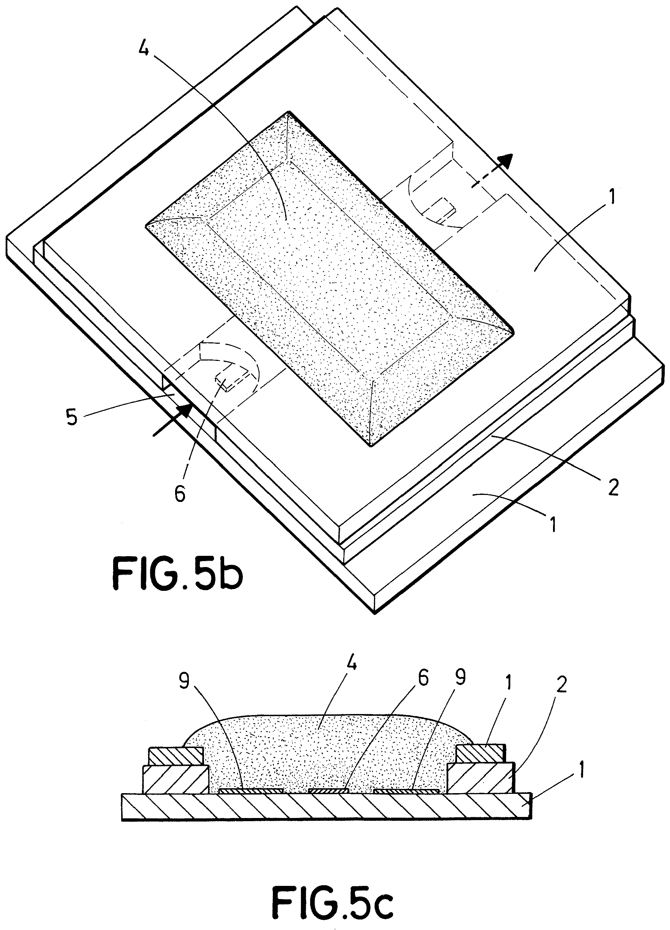

In figures 5a-c it is represented another embodiment of the invention. In this case, the microfluidics valve is designed to be used in applications requiring closure of the valve while there is a fluid flow through it, and therefore pressure difference across it.

As previously described, in cases in which the valve has to be used in applications in which a difference of pressure at both sides of the valve is present, additional optical heaters are needed.

In this case it is represented a valve which comprises two substrates (1) joined by an adhesive (2). Between the substrates (1) it is formed at least a microchannel (5) and a barrier (4) of a meltable material is placed blocking said microchannel (5), as in the embodiment of figures 1a-c. The valve also comprises a hole (3) in correspondence with the microchannel (5) for the passing of the meltable material for forming the barrier (4) when manufacturing the valve.

In figures 5a-5c it can be appreciated the essential feature of this embodiment of the invention which is that the microfluidics valve, in this case, comprises a plurality of heaters. In this case, a first optical heater (6) is placed in correspondence with the barrier (4), in longitudinal direction of the barrier (4) and projecting from its sides.

In this embodiment, there is also at least an additional optical heater (9) placed at one side of the first heater (6). Preferably, as represented in the figures, there are two additional optical heaters (9) which are placed each one at each side of the first heater (6). Said additional optical heaters (9) are contained in the space of the microchannel (5) occupied by the barrier (4), embedded in said barrier (4). That is to say, the additional optical heaters (9) do not project out of the barrier (4) at any point.

The first optical heater (6) and the additional optical heaters (9) are photothermal colored features which are colored in different colors, complementary colors, that is, absorb light power at different frequency ranges. In an exemplary embodiment of the invention the first optical heater (6) is a magenta line and the additional optical heaters (9) are cyan lines. Those colors have been selected because they adsorb light at different frequencies, the magenta line absorbing green light, that is light of wavelength around 530 nanometers and the cyan line absorbing red light, that is, light of wavelength around 630 nanometers, so it is possible to not actuate the additional optical heaters when actuating the first optical heater and viceversa.

In this case, to open the valve, since the first optical heater (6) is magenta, a green light (8) is applied in order to heat the first optical heater (6) without heating the additional heaters, as can be seen in figures 6a-b.

In order to close the valve, an additional light source (10) is used. In this case the additional optical heaters (9) are cyan so the additional light source (10) is red. When the additional light source actuates the optical heaters (9), the meltable material in contact with those additional optical heaters (9) is melted and displaces to the tunnel (11) where it becomes solid, creating again the barrier (4) and blocking the microchannel (5), as can be seen in figures 7a-c.

This valve notably improves current drawbacks of paraffin wax microvalves in terms of response time, energy consumption, multiple actuation and complexity of the fabrication processes. Furthermore, the microfluidic technology described here is highly promising for mass production of fully-integrated disposable lab-on-a-chip devices.

## Claims

1. Microfluidics valve which comprises:
- at least two substrates (1) between which at least a microchannel (5) is formed;
- at least a barrier (4) of a meltable material, placed in the microchannel (5), blocking said microchannel (5); and
- at least an optical heater (6) configured to melt the barrier (4);
wherein at least a section of one of the substrates (1) is transparent,
**characterized in that** the optical heater (6) is placed in the longitudinal direction of the microchannel (5) projecting from both sides of the barrier (4).

2. Microfluidics valve according to claim 1 **characterized in that** the optical heater (6) is placed in one of the substrates (1) and is facing the barrier (4).

3. Microfluidics valve according to claim 2 **characterized in that** the optical heater (6) is in contact with the barrier (4).

4. Microfluidics valve according to claim 1 **characterized in that** the optical heater (6) is a feature made of a photothermal material that can absorb light energy in a range of frequencies.

5. Microfluidics valve according to claim 1 **characterized in that** the optical heater (6) is a printed dark colored line placed in one of the substrates (1).

6. Microfluidics valve according to claim 1 **characterized in that** one of the substrates comprises at least a hole (3) in correspondence with the microchannel (5) and facing the optical heater (6).

7. Microfluidics valve according to claim 1 **characterized in that** it comprises a first optical heater (6) placed in the microchannel (5) in correspondence with the barrier (4) and at least an additional optical heater (9) placed in one side of the first optical heater (6).

8. Microfluidics valve according to claim 7 **characterized in that** it comprises two additional optical heaters (9) placed each at one side of the first optical heater (6).

9. Microfluidics valve according to claim 7 **characterized in that** the additional optical heaters (9) do not project out of the barrier (4) at any point.

10. Microfluidics valve according to claim 7 **characterized in that** the first optical heater and the additional optical heaters are photothermal colored features of different colors.

11. Microfluidics valve according to claim 7 **characterized in that** the first optical heater (6) and the additional optical heaters (9) are colored features of complementary colors.

12. Microfluidics valve according to claim 7 **characterized in that** the first optical heater (6) is a magenta line and the additional optical heaters (9) are cyan lines.

13. Microfluidics valve according to claim 1 **characterized in that** the meltable material is wax.

## Patentansprüche

1. Mikrofluidventil, Folgendes umfassend:
- mindestens zwei Substrate (1), zwischen denen mindestens ein Mikrokanal (5) gebildet ist;
- mindestens eine Grenzschicht (4) aus schmelzbarem Material, die in dem Mikrokanal (5) platziert ist, die den Mikrokanal (5) blockiert; und
- mindestens eine optische Heizung (6), die konfiguriert ist, um die Grenzschicht (4) zu schmelzen;
wobei mindestens ein Abschnitt eines der Substrate (1) transparent ist, **dadurch gekennzeichnet, dass** die optische Heizung (6) in Längsrichtung des Mikrokanals (5) platziert ist, der von beiden Seiten der Grenzschicht (4) vorsteht.

2. Mikrofluidventil nach Anspruch 1, **dadurch gekennzeichnet, dass** die optische Heizung (6) in einem der Substrate (1) platziert ist und der Grenzschicht (4) zugewandt ist.

3. Mikrofluidventil nach Anspruch 2, **dadurch gekennzeichnet, dass** die optische Heizung (6) mit der Grenzschicht (4) in Kontakt steht.

4. Mikrofluidventil nach Anspruch 1, **dadurch gekennzeichnet, dass** die optische Heizung (6) ein Merkmal ist, das aus einem photothermischen Material hergestellt ist, das Lichtenergie in einem Frequenzbereich absorbieren kann.

5. Mikrofluidventil nach Anspruch 1, **dadurch gekennzeichnet, dass** die optische Heizung (6) eine gedruckte dunkelfarbige Linie ist, die in einem der Substrate (1) platziert ist.

6. Mikrofluidventil nach Anspruch 1, **dadurch gekennzeichnet, dass** eines der Substrate mindestens ein Loch (3) entsprechend dem Mikrokanal (5) umfasst und der optischen Heizung (6) zugewandt ist.

7. Mikrofluidventil nach Anspruch 1, **dadurch gekennzeichnet, dass** es eine erste optische Heizung (6) umfasst, die in dem Mikrokanal (5) in Übereinstimmung mit der Grenzschicht (4) platziert ist und mindestens eine zusätzliche optische Heizung (9), die in einer Seite der ersten optischen Heizung (6) platziert ist.

8. Mikrofluidventil nach Anspruch 7, **dadurch gekennzeichnet, dass** es zwei zusätzliche optische Heizungen (9) umfasst, die jeweils auf einer Seite der ersten optischen Heizung (6) platziert sind.

9. Mikrofluidventil nach Anspruch 7, **dadurch gekennzeichnet, dass** die zusätzlichen optischen Heizungen (9) an keinem Punkt aus der Grenzschicht (4) vorstehen.

10. Mikrofluidventil nach Anspruch 7, **dadurch gekennzeichnet, dass** die erste optische Heizung und die zusätzlichen optischen Heizungen photothermisch gefärbte Merkmale von unterschiedlichen Farben sind.

11. Mikrofluidventil nach Anspruch 7, **dadurch gekennzeichnet, dass** die erste optische Heizung (6) und die zusätzlichen optischen Heizungen (9) gefärbte Merkmale von komplementären Farben sind.

12. Mikrofluidventil nach Anspruch 7, **dadurch gekennzeichnet, dass** die erste optische Heizung (6) eine Magentalinie ist und die zusätzlichen optischen Heizungen (9) Cyanlinien sind.

13. Mikrofluidventil nach Anspruch 1, **dadurch gekennzeichnet, dass** das schmelzbare Material Wachs ist.

## Revendications

1. Soupape microfluidique qui comprend :
- au moins deux substrats (1) entre lesquels est formé au moins un microcanal (5) ;
- au moins une barrière (4) en un matériau fusible, placée dans le microcanal (5), bloquant ledit microcanal (5) ; et
au moins un dispositif de chauffage optique (6) configuré pour faire fondre la barrière (4) ;
dans laquelle au moins une section de l'un des substrats (1) est transparente, **caractérisée en ce que** le dispositif de chauffage optique (6) est placé dans la direction longitudinale du microcanal (5) faisant saillie des deux côtés de la barrière (4).

2. Soupape microfluidique selon la revendication 1 **caractérisée en ce que** le dispositif de chauffage optique (6) est placé dans l'un des substrats (1) et est en regard de la barrière (4).

3. Soupape microfluidique selon la revendication 2 **caractérisée en ce que** le dispositif de chauffage optique (6) est en contact avec la barrière (4).

4. Soupape microfluidique selon la revendication 1 **caractérisée en ce que** le dispositif de chauffage optique (6) est un élément constitué d'un matériau photothermique qui peut absorber de l'énergie lumineuse dans une plage de fréquences.

5. Soupape microfluidique selon la revendication 1 **caractérisée en ce que** le dispositif de chauffage optique (6) est une ligne imprimée de couleur sombre placée dans l'un des substrats (1).

6. Soupape microfluidique selon la revendication 1 **caractérisée en ce que** l'un des substrats comprend au moins un trou (3) en correspondance avec le microcanal (5) et en regard du dispositif de chauffage optique (6).

7. Soupape microfluidique selon la revendication 1 **caractérisée en ce qu'**elle comprend un premier dispositif de chauffage optique (6) placé dans le microcanal (5) en correspondance avec la barrière (4) et au moins un dispositif de chauffage optique (9) supplémentaire placé sur un côté du premier dispositif de chauffage optique (6).

8. Soupape microfluidique selon la revendication 7 **caractérisée en ce qu'**elle comprend deux dispositifs de chauffage optique (9) supplémentaires placés chacun sur un côté du premier dispositif de chauffage optique (6).

9. Soupape microfluidique selon la revendication 7 **caractérisée en ce que** les dispositifs de chauffage optique (9) supplémentaires ne font pas saillie hors de la barrière (4) en aucun point.

10. Soupape microfluidique selon la revendication 7 **caractérisée en ce que** le premier dispositif de chauffage optique et les dispositifs de chauffage optique supplémentaires sont des éléments photothermiques colorés de différentes couleurs.

11. Soupape microfluidique selon la revendication 7 **caractérisée en ce que** le premier dispositif de chauffage optique (6) et les dispositifs de chauffage optique (9) supplémentaires sont des éléments de couleurs complémentaires.

12. Soupape microfluidique selon la revendication 7 **caractérisée en ce que** le premier dispositif de chauffage optique (6) est une ligne magenta et les dispositifs de chauffage optique (9) supplémentaires sont des lignes cyan.

13. Soupape microfluidique selon la revendication 1 **caractérisée en ce que** le matériau fusible est de la cire.
